# EUROPEAN PATENT APPLICATION

(11) **EP 4 129 607 A1**
(43) Date of publication of application: **08.02.2023**
(21) Application number: 21776538.7
(22) Date of filing: 22.03.2021
(51) Int. Cl.: B29C 33/76, B29C 43/36, B29C 70/54

(54) **METHOD FOR MANUFACTURING FIBER-REINFORCED RESIN PRODUCT, AND CORE**

(30) Priority: 26.03.2020 JP 2020056726
(71) Applicant: Mitsubishi Chemical Corporation, Chiyoda-ku Tokyo 100-8251 (JP)
(72) Inventor: TAKANO Tsuneo, Tokyo 100-8251 (JP); KAJI Satoshi, Tokyo 100-8251 (JP); HONMA Takashi, Tokyo 100-8251 (JP)
(74) Representative: Hoffmann Eitle
(86) International application number: PCT/JP2021/011690
(87) International publication number: WO 2021/193524

(57) **Abstract**

The present disclosure provides beneficial improvements relating to a manufacturing method for a fiber reinforced plastic product, the manufacturing method including curing while pressurizing a prepreg preform by using a core comprising a wax.

The present disclosure mainly relates to a manufacturing method for a fiber reinforced plastic product, including a molding step including disposing a prepreg preform in a mold together with a core comprising a fusible part comprising a wax and an outer skin covering the fusible part, and heating and pressurizing the prepreg preform in the mold to obtain a cured product; and a wax removal step including removing the wax from the cured product, in which the prepreg preform is at least partially pressurized by expansion of the core. In an example, the molding temperature in the molding step is 140°C or higher, the prepreg preform at least partially has a thickness of 1 mm or more, and the fusible part has a first fusible part comprising a first wax having a melting point of lower than 80°C.

## Description

### [Technical Field]

The present invention mainly relates to a manufacturing method for a fiber reinforced plastic product and a core used for manufacturing a fiber reinforced plastic product.

Priority is claimed on Japanese Patent Application No. 2020-056726, filed March 26, 2020, the content of which is incorporated herein by reference.

### [Background Art]

Fiber reinforced plastic (FRP) products are used in various use applications including a reinforcement for automobiles.

As a method for molding an FRP product having a hollow part or a U-shaped cross-section part, a method including disposing a prepreg preform in a mold together with a core comprising a wax and curing it while pressurizing by causing the core to expand inside the mold has been proposed (Patent Document 1).

### [Citation List]

### [Patent Document]

[Patent Document 1]
PCT International Publication No. WO 2018/079824

### [Summary of Invention]

### [Technical Problem]

Amain object of the present invention is to provide beneficial improvements relating to a manufacturing method for a fiber reinforced plastic product, the manufacturing method including curing while pressurizing a prepreg preform by using a core comprising a wax.

The problems solved by each embodiment of the present invention may be disclosed explicitly or implicitly in the specification.

### [Solution to Problem]

Embodiments of the present invention include the following, but are not limited thereto.
[1] A manufacturing method for a fiber reinforced plastic product, including: a molding step including disposing a prepreg preform in a mold together with a core comprising a fusible part comprising a wax and an outer skin covering the fusible part, and heating and pressurizing the prepreg preform in the mold to obtain a cured product, and in which the prepreg preform is at least partially pressurized by expansion of the core; and a wax removal step including removing the wax from the cured product, wherein a molding temperature in the molding step is 140°C or higher, the prepreg preform at least partially has a thickness of 1 mm or more, and the fusible part has a first fusible part comprising a first wax having a melting point of lower than 80°C.
[2] The manufacturing method according to [1], wherein the first fusible part is in contact with the outer skin.
[3] The manufacturing method according to [1] or [2], wherein the core is preheated before the molding step.
[4] The manufacturing method according to [3], wherein the fusible part comprises particles of a material having a property of generating heat in a high-frequency electromagnetic field, and the preheating is performed by induction heating.
[5] The manufacturing method according to [3], wherein the fusible part comprises particles of a material having a property of absorbing microwaves and thus generating heat, and the preheating is performed by microwave heating.
[6] The manufacturing method according to any one of [1] to [5], wherein the fusible part consists of the first fusible part.
[7] The manufacturing method according to any one of [1] to [5], wherein the fusible part comprises the first fusible part and a second fusible part comprising a second wax having a melting point higher than that of the first wax and being incompatible with the first wax.
[8] The manufacturing method according to [7], wherein one of the first wax and the second wax is a wax comprising an organic compound having a polar group, and the other is a wax comprising a hydrocarbon as a main component.
[9] The manufacturing method according to any one of [1] to [8], wherein the prepreg preform comprises an SMC.
[10] The manufacturing method according to any one of [1] to [9], wherein in the molding step, a plurality of the prepreg preforms are disposed in the mold such that each of the prepreg preforms encloses one said core, and the prepreg preforms are heated and pressurized in the mold to obtain a single cured product.
[11] The manufacturing method according to any one of [1] to [10], wherein the mold comprises a cavity formed by a lower mold, an upper mold, and a slide core.
[12] A core to be disposed in a mold together with a prepreg when a fiber reinforced plastic product is manufactured by curing the prepreg by heating and pressurizing thereof in the mold, the core comprising a fusible part comprising a wax and an outer skin covering the fusible part, wherein the fusible part has a first fusible part comprising a first wax having a melting point of lower than 80°C.
[13] The core according to [12], wherein the first fusible part is in contact with the outer skin.
[14] The core according to [12] or [13], wherein the fusible part comprises particles of a material having a property of generating heat in a high-frequency electromagnetic field.
[15] The core according to [12] or [13], wherein the fusible part comprises particles of a material having a property of absorbing microwaves and thus generating heat.
[16] The core according to any one of [12] to [15], wherein the fusible part consists of the first fusible part.
[17] The core according to any one of [12] to [15], wherein the fusible part comprises the first fusible part and a second fusible part comprising a second wax having a melting point higher than that of the first wax and being incompatible with the first wax.
[18] The core according to [17], wherein one of the first wax and the second wax is a wax comprising an organic compound having a polar group, and the other is a wax comprising a hydrocarbon as a main component.
[19] A core to be disposed in a mold together with a prepreg when a fiber reinforced plastic product is manufactured by curing the prepreg by heating and pressurizing thereof in the mold, the core comprising a fusible part comprising a wax and an outer skin covering the fusible part, wherein the fusible part comprises particles of a material having a property of generating heat in a high-frequency electromagnetic field.
[20] The core according to [19], wherein the fusible part comprises a first fusible part comprising a first wax and a second fusible part comprising a second wax having a melting point higher than that of the first wax and being incompatible with the first wax.
[21] The core according to [20], wherein the first fusible part is in contact with the outer skin.
[22] The core according to [20] or [21], wherein one of the first wax and the second wax is a wax comprising an organic compound having a polar group, and the other is a wax comprising a hydrocarbon as a main component.
[23] A manufacturing method for a fiber reinforced plastic product, including: a molding step including disposing a prepreg in a mold together with the core according to any one of [19] to [22] and heating and pressurizing the prepreg in the mold to obtain a cured product; and a wax removal step including removing the wax constituting the fusible part of the core from the cured product, wherein the core is preheated by induction heating before the molding step, and in the molding step, the fusible part of the core at least partially fuses, and the prepreg is at least partially pressurized by expansion of the core.
[24] A core to be disposed in a mold together with a prepreg when a fiber reinforced plastic product is manufactured by curing the prepreg by heating and pressurizing thereof in the mold, the core comprising a fusible part comprising a wax and an outer skin covering the fusible part, wherein the fusible part comprises particles of a material having a property of absorbing microwaves and thus generating heat.
[25] The core according to [24], wherein the fusible part comprises a first fusible part comprising a first wax and a second fusible part comprising a second wax having a melting point higher than that of the first wax and being incompatible with the first wax.
[26] The core according to [25], wherein the first fusible part is in contact with the outer skin.
[27] The core according to [25] or [26], wherein one of the first wax and the second wax is a wax comprising an organic compound having a polar group, and the other is a wax comprising a hydrocarbon as a main component.
[28] A manufacturing method for a fiber reinforced plastic product, including: a molding step including disposing a prepreg in a mold together with the core according to any one of [24] to [27] and heating and pressurizing the prepreg in the mold to obtain a cured product; and a wax removal step including removing the wax constituting the fusible part of the core from the cured product, wherein the core is preheated by microwave heating before the molding step, and in the molding step, the fusible part of the core at least partially fuses, and the prepreg is at least partially pressurized by expansion of the core.
[29] A manufacturing method for a fiber reinforced plastic product, including disposing a prepreg in a mold together with the core according to any one of [12] to [22] and [24] to [27] and curing the prepreg by heating and pressurizing thereof in the mold.
[30] Use of the core according to any one of [12] to [22] and [24] to [27], in a manufacturing method for a fiber reinforced plastic product including disposing a prepreg in a mold together with a core and curing the prepreg by heating and pressurizing thereof in the mold.
[31] A manufacturing method for a fiber reinforced plastic product, including: a molding step including heating and pressurizing a prepreg preform in a mold to obtain a cured product having a hollow part, the prepreg preform having a core-containing part in which a core comprising a fusible part comprising a wax and an outer skin covering the fusible part, is wrapped with a prepreg sheet; and a wax removal step including removing the wax from an inside of the hollow part, wherein the prepreg preform has a through-hole formed in the core-containing part, and an elastomer plug is inserted into the through-hole.
[32] The manufacturing method according to [31], wherein the elastomer plug is at least partially tapered along a direction of insertion into the through-hole.
[33] The manufacturing method according to [32], wherein the elastomer plug is inserted into the through-hole such that a side having a larger diameter of a cross-section orthogonal to the direction of insertion into the through-hole faces toward the core.
[34] The manufacturing method according to any one of [31] to [33], wherein the elastomer plug has a protrusion or a dent on a side surface.
[35] The manufacturing method according to any one of [31] to [34], wherein in the wax removal step, one end of a metal tube is made to pierce through the elastomer plug, and all or a part of the wax is discharged from the hollow part through the metal tube.
[36] The manufacturing method according to [35], wherein in the wax removal step, the metal tube is at least partially heated.
[37] The manufacturing method according to [35] or [36], wherein the other end of the metal tube is connected to a collection container.
[38] The manufacturing method according to any one of [31] to [37], wherein the core is preheated before the molding step.
[39] The manufacturing method according to [38], wherein the fusible part comprises particles of a material having a property of generating heat in a high-frequency electromagnetic field, and the preheating is performed by induction heating.
[40] The manufacturing method according to [38], wherein the fusible part comprises particles of a material having a property of absorbing microwaves and thus generating heat, and the preheating is performed by microwave heating.
[41] The manufacturing method according to any one of [31] to [40], wherein the prepreg preform at least partially has a thickness of 1 mm or more in the core-containing part, the fusible part has a first fusible part comprising a first wax having a melting point of lower than 80°C, and the molding temperature in the molding step is 140°C or higher.
[42] The manufacturing method according to [41], wherein the first fusible part is in contact with the outer skin.
[43] The manufacturing method according to [41] or [42], wherein the fusible part consists of the first fusible part.
[44] The manufacturing method according to [41] or [42], wherein the fusible part comprises the first fusible part and a second fusible part comprising a second wax having a melting point higher than that of the first wax and being incompatible with the first wax.
[45] The manufacturing method according to [44], wherein one of the first wax and the second wax is a wax comprising an organic compound having a polar group, and the other is a wax comprising a hydrocarbon as a main component.
[46] The manufacturing method according to any one of [41] to [45], wherein the prepreg preform comprises an SMC.
[47] A manufacturing method for a fiber reinforced plastic product, including: a molding step including disposing a prepreg preform in a mold together with a core comprising a fusible part comprising a wax and an outer skin covering the fusible part, and heating and pressurizing the prepreg preform in the mold to obtain a cured product, and in which the prepreg preform is at least partially pressurized by expansion of the core; and a wax removal step including removing the wax from the cured product, wherein the core is preheated before the molding step.
[48] The manufacturing method according to [47], wherein the fusible part has a first fusible part comprising a first wax having a melting point of lower than 80°C.
[49] The manufacturing method according to [48], wherein the first fusible part is in contact with the outer skin.
[50] The manufacturing method according to [48] or [49], wherein the fusible part consists of the first fusible part.
[51] The manufacturing method according to [48] or [49], wherein the fusible part comprises the first fusible part and a second fusible part comprising a second wax having a melting point higher than that of the first wax and being incompatible with the first wax.
[52] The manufacturing method according to [51], wherein one of the first wax and the second wax is a wax comprising an organic compound having a polar group, and the other is a wax comprising a hydrocarbon as a main component.
[53] The manufacturing method according to any one of [47] to [52], wherein the prepreg preform at least partially has a thickness of 1 mm or more.
[54] The manufacturing method according to [53], wherein the prepreg preform comprises an SMC.
[55] The manufacturing method according to any one of [47] to [54], wherein the molding temperature in the molding step is 140°C or higher.

### [Advantageous Effects of Invention]

There are provided beneficial improvements relating to a manufacturing method for a fiber reinforced plastic product, the manufacturing method including curing while pressurizing a prepreg preform by using a core comprising a wax.

### [Brief Description of Drawings]

Fig. 1 is a flow chart for an FRP product manufacturing method according to an embodiment.
Fig. 2 is a cross-sectional view showing a structure of a core that can be used in the FRP product manufacturing method according to the embodiment.
Fig. 3 is a cross-sectional view showing the structure of a core that can be used in the FRP product manufacturing method according to the embodiment.
Fig. 4 is a cross-sectional view showing the structure of a core that can be used in the FRP product manufacturing method according to the embodiment.
Fig. 5 is a cross-sectional view showing that a prepreg preform having a near net shape is disposed around a core.
Fig. 6 is a cross-sectional view showing that a prepreg preform is disposed in a cavity of a mold together with a core enclosed by the prepreg preform.
Fig. 7 is a cross-sectional view showing a butt part between prepreg sheet edges.
Fig. 8 is a cross-sectional view showing an overlap joint between prepreg sheet edges.
Fig. 9 is a cross-sectional view showing two partial prepreg preforms disposed in a mold cavity each together with a core enclosed by the prepreg preform.
Fig. 10 is a cross-sectional view showing an FRP article molded from the two partial prepreg preforms shown in Fig. 9.
Fig. 11 is a cross-sectional view showing a prepreg preform disposed in a mold cavity together with a core enclosed by the prepreg preform.
Fig. 12 is a cross-sectional view showing that a prepreg preform having a near net shape is disposed around a core.
Fig. 13 shows that one end of a metal tube is made to pierce through the elastomer plug to discharge a wax in the cavity of an FRP product into a collection container through the metal tube.

### [Description of Embodiments]

A prepreg (pre-impregnated composite material) is a composite comprising fibers and a thermosetting resin, the composite being used as an intermediate material in the manufacture of FRP products. An FRP product is manufactured by preforming a prepreg and then curing it in a mold.

The form of fibers in the prepreg varies from long fibers to a woven fabric, a nonwoven fabric, a non-crimp fabric, short fibers, and the like. A sheet type prepreg obtained by impregnating a long fiber bundle aligned in one direction in one plane with a resin is called a unidirectional prepreg (UD prepreg). A prepreg obtained by impregnating a woven fabric woven with long fiber bundles, with a resin is called a cloth prepreg. A prepreg obtained by impregnating a mat comprising chopped short fiber bundles with a resin is called an SMC (sheet molding compound). A prepreg obtained by impregnating a single long fiber bundle with a resin is called a tow prepreg.

Examples of the fibers used for a prepreg include carbon fibers, glass fibers, aramid fibers, silicon carbide fibers, and metal fibers. Two or more kinds of fibers may be used in combination.

Examples of the thermosetting resin used for a prepreg include an epoxy resin, a urea resin, a vinyl ester resin (also called an epoxy acrylate resin), an unsaturated polyester resin, a polyurethane resin, and a phenol resin. A mixture of two or more kinds of thermosetting resins may also be used.

A content of the thermosetting resin in the prepreg is not limited to, but in many cases 15% to 50% by mass. The content may be 15% to 20% by mass, 20% to 25% by mass, 25% to 40% by mass, 40% to 45% by mass, or 45% to 50% by mass.

Various additives can be added to a prepreg. Examples include a reactive diluent, a low shrinkage agent, a flame retardant, an antifoaming agent, a defoaming agent, a mold release agent, a particulate filler, a colorant, and a silane coupling agent.

### 1. Manufacturing method for FRP product

One of the embodiments of the present invention relates to a manufacturing method for an FRP product.

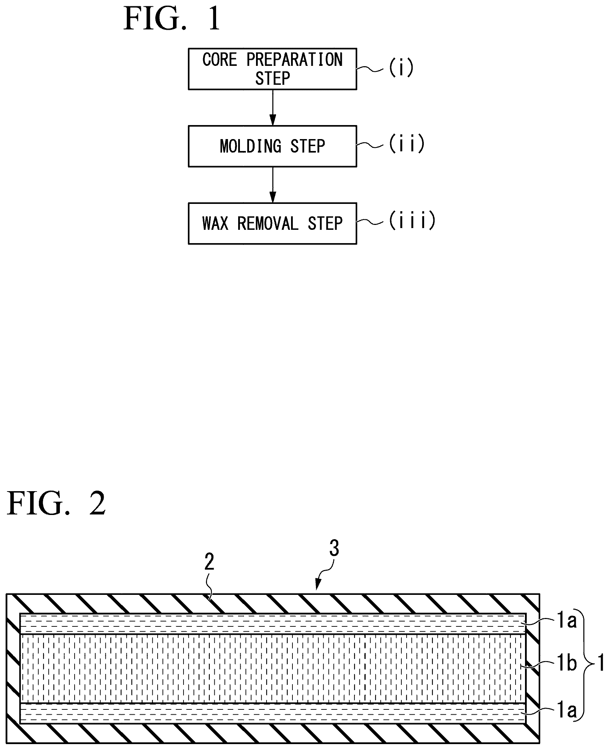

In the following description, the FRP product manufacturing method according to the embodiment will be divided into the following three steps as shown in the flow chart of Fig. 1, for the convenience of explanation.
(i) A core preparation step including preparing a core comprising a fusible part comprising a wax and an outer skin covering the fusible part.
(ii) A molding step including disposing a prepreg preform in a mold together with the core and heating and pressurizing the prepreg preform in the mold to obtain a cured product (FRP product).
(iii) A wax removal step including removing the wax from the cured product.

The FRP product manufacturing method according to the embodiment is preferably used for manufacturing an FRP product having a structure including a bent or curved wall surface. Typical examples of the structure including a bent or curved wall surface include a hollow structure, a cylindrical structure, a structure with a U-shaped cross-section, and a structure with an L-shaped cross-section. Various undercuts also often include bent or curved wall surfaces in the structure.

Hereinafter, each of the steps (i) to (iii) will be described in detail with reference to the drawings, by taking a case where a hollow cuboid article is manufactured as an FRP product, as an example. The hollow cuboid has a wall surface bent at an angle of 90 degrees.

### (1) Core preparation step

Fig. 2 is a cross-sectional view showing the structure of a core prepared in the core preparation step (i).

The core 3 comprises a fusible part 1 comprising a wax and an outer skin 2 covering the fusible part, and the fusible part 1 further comprises a first fusible part 1a comprising a first wax and a second fusible part 1b comprising a second wax.

Melting points of the first wax and the second wax are different from each other, and the melting point of the first wax is lower than the melting point of the second wax.

Both the melting point of the first wax and the melting point of the second wax are higher than room temperature (25°C) and are preferably 50°C or higher. The upper limit of the melting point that the first wax and the second wax should have will be described later.

The first wax and the second wax are incompatible with each other. Therefore, a melt of the first wax does not dissolve the second wax, and when the melt of the first wax and a melt of the second wax are put into one container, the two are separated into two phases.

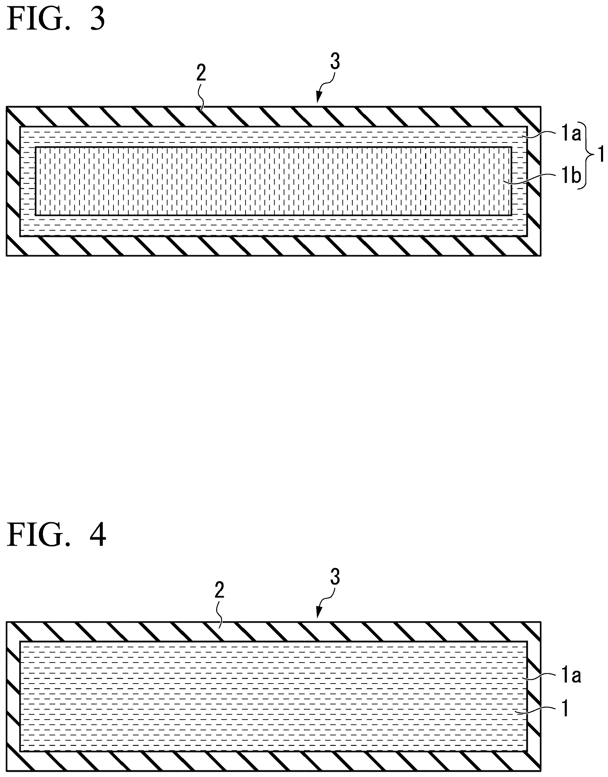

The first fusible part 1a is disposed so as to be in contact with the outer skin 2, and this is advantageous in promoting fusion of the first fusible part 1a in the molding step (ii). As shown in Fig. 3, this effect is conspicuous when a part of the fusible part 1 that is in contact with the outer skin 2 is entirely included in the first fusible part 1a.

In an example, as shown in Fig. 4, the fusible part 1 may consist of the first fusible part 1a.

As can be seen from Fig. 2, the first fusible part 1a may be divided into several parts.

In any of the examples shown in Fig. 2 to Fig. 4, each of the first fusible parts 1a does not have to comprise a single piece. For example, in Fig. 4, the first fusible part 1a may be configured by stacking two or more plates each comprising the first wax.

The same also applies to the second fusible part 1b, and the second fusible part 1b may comprise a single piece or may comprise a plurality of pieces.

According to the investigation made by the present inventors, there is a tendency that a wax comprising an organic compound having a polar group and a wax comprising a hydrocarbon as a main component are less likely to be compatible with each other. Therefore, in a suitable example, the first wax and the second wax are such that one is a wax comprising an organic compound having a polar group, while the other is a wax comprising a hydrocarbon as a main component. That is, when the first wax is a wax comprising an organic compound having a polar group, the second wax is a wax comprising a hydrocarbon as a main component, and when the first wax is a wax comprising a hydrocarbon as a main component, the second wax is a wax comprising an organic compound having a polar group.

The polar group is a functional group including a carbon-oxygen bond or a carbon-nitrogen bond (except for an ether group), such as a hydroxyl group, an amino group, an amide group, a carbonyl group, a carboxyl group, or an ester group. A wax comprising a hydroxy fatty acid amide, a fatty acid amide, a hydroxy fatty acid ester, or a fatty acid ester as a main component is a typical example of the wax comprising an organic compound having a polar group.

Examples of the wax comprising a hydrocarbon as a main component include petroleum waxes such as paraffin wax and microcrystalline wax, as well as synthetic waxes such as Fischer-Tropsch wax, polyethylene wax, and polypropylene wax.

Various additives can be added, if necessary, to the fusible part 1 of the core 3 shown in Fig. 2 to Fig. 4. The additives may be added to both the first fusible part 1a and the second fusible part 1b or may be added to one of them only.

In an example, the core 3 can be lightened by adding hollow particles having a particle specific gravity (specific gravity of individual particles) smaller than the specific gravity of the wax, to the fusible part 1.

In another example, the core 3 may be made induction-heatable by adding particles of a material having a property of generating heat in a high-frequency electromagnetic field to the fusible part 1. Examples of such a material include a ferromagnetic material, a ferrimagnetic material, and an electroconductive material. Examples of the ferromagnetic material include iron, nickel, cobalt, an iron alloy, a nickel alloy, a cobalt alloy, a permalloy, and many steels. Examples of the ferrimagnetic material include magnetite, nickel-zinc ferrite, manganese-zinc ferrite, and copper-zinc ferrite. Examples of the electroconductive material include copper, aluminum, and brass.

In still another example, the core 3 can be made microwave-heatable by adding particles of a material having a property of absorbing microwaves and thus generating heat, to the fusible part 1. Examples of such a material include silicon carbide, ferrite, barium titanate, anatase-type titanium oxide, graphite, and carbon black.

All of the above-described particles may be hollow or may have a core-shell structure.

Induction heating or microwave heating of the core can be performed in the molding step (ii) or can be performed when the core is preheated outside the mold before the molding step (ii).

In order to prevent the outer skin 2 from being broken by the deformation and expansion of the fusible part 1 in the molding step (ii), the material of the outer skin 2 should be capable of extensional deformation at the molding temperature. This extensional deformation may be elastic, may be plastic, or may have both natures.

Therefore, a preferred material for the outer skin 2 is, but not limited to, an organic material, and particularly a resin material. Examples of the preferred material for the outer skin 2 include synthetic polymers such as a polyolefin, a polyamide, a polyester, a polyurethane, a silicone, and a fluororubber, and further include elastomers comprising these polymers.

When manufacturing the core 3, for example, a first wax piece prepared for the first fusible part 1a and a second wax piece prepared for the second fusible part 1b are wrapped with a polymer film prepared for the outer skin 2 and sealed by adhesion or fusion. The shapes of the first wax piece and the second wax piece are arranged such that as little space as possible is formed between the core to be produced and the prepreg preform to be produced in a subsequent step.

The outer skin 2 can also be formed by using a shrink tube comprising the above-described polymer. A shrink tube in which a wax piece for the fusible part has been put in may be subjected to thermal shrinkage, and both ends of the shrink tube may be heat-sealed.

The outer skin 2 can also be formed by using a low-temperature curable liquid rubber comprising the above-described polymer. A liquid rubber may be applied on a surface of a wax for the fusible part and cured at a temperature at which the wax does not fuse. In a modified method, it is also acceptable that a liquid rubber is applied on the surface of the wax for the fusible part, subsequently a nonwoven fabric made of a synthetic resin and capable of extensional deformation is stuck to the coated surface as a reinforcing material, the liquid rubber is further applied on the nonwoven fabric, and then the liquid rubber is cured.

The outer skin 2 can also be formed of a UV-curable elastomer. A UV-curable elastomer is a UV-curable resin whose cured product is an elastic body such as rubber, and examples thereof include a UV-curable silicone rubber and a UV-curable urethane acrylate. The UV-curable elastomer is suitable as the material for the outer skin 2, from the viewpoint that the UV-curable elastomer can be cured in a short period of time even at room temperature.

### (2) Molding step

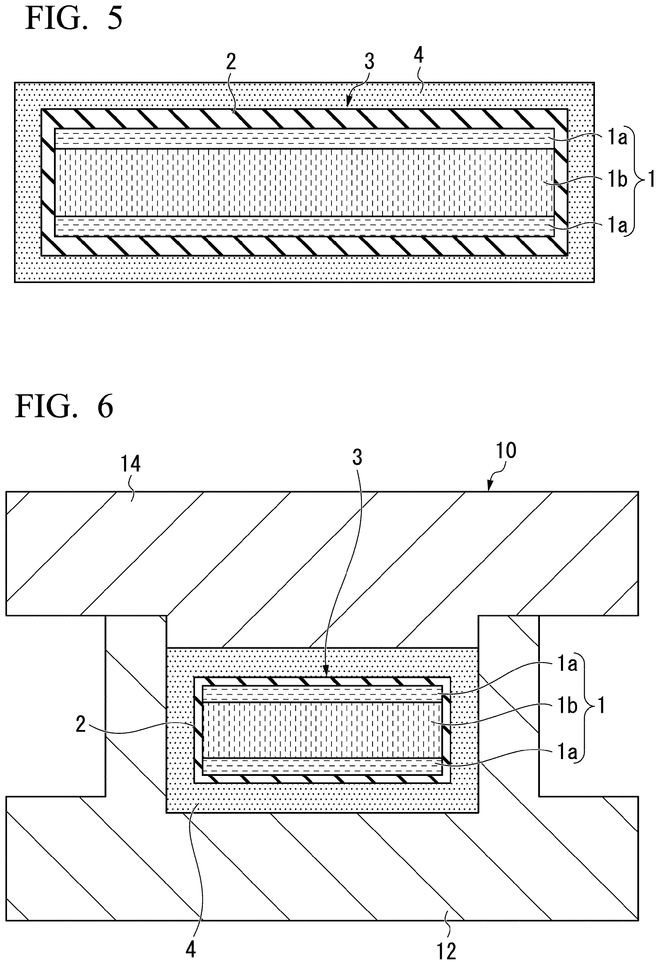

In the molding step (ii), first, a prepreg preform 4 having a near net shape is prepared from one or two or more prepreg sheets, and disposed around the core 3 as shown in Fig. 5. In an example, rather than preparing the prepreg preform 4 in a separate step and then combining it with the core 3, the prepreg preform 4 may be prepared so as to be in a state of enclosing the core 3 from the beginning, that is, in the state as shown in Fig. 5.

The prepreg preform 4 may be produced by combining different kinds of prepregs. In a preferred example, the prepreg preform 4 can be produced by combining an SMC with one or more prepregs selected from a unidirectional prepreg, a cloth prepreg, and a tow prepreg.

After preparing the prepreg preform 4, the prepreg preform 4 is disposed in a cavity of a mold 10 comprising a lower mold 12 and an upper mold 14, together with the core 3 enclosed by the prepreg preform 4, as shown in Fig. 6. Usually, the mold 10 is heated to the same temperature as the molding temperature at this time. The mold 10 preferably has a vacuum mechanism.

Next, the mold 10 is clamped to cure the prepreg preform 4. The temperature of the mold 10 is not limited to, but usually in a range from 120°C to 180°C, and preferably 140°C or higher. As the temperature of the mold 10 is higher, the time required for molding is shortened.

The core 3 expands by absorbing heat transferred from the mold 10 through the prepreg preform 4, and the prepreg preform 4 is pressed against an inner surface of the mold 10. In other words, an internal pressure generated as the core 3 attempts to expand against the clamping force of the mold 10 is applied to the prepreg preform 4.

Immediately after the mold clamping, since a volume of the core 3 increases only gradually due to thermal expansion, the pressure applied to the prepreg preform 4 is weak, however, when the temperature near the surface of the core 3 reaches the melting point of the first wax, and the first fusible part 1a begins to fuse, the pressure applied to the prepreg preform 4 rises sharply. This is because when the wax fuses, its volume increases significantly.

The fused first wax flows to spread evenly over the entire space between the unfused part of the fusible part 1 and the outer skin 12. By the fused first wax acting as a pressure medium, all parts of the prepreg preform 4 are pressed against the inner surface of the mold 10 with substantially the same pressure.

In the molding step (ii), the first fusible part 1a is not required to fuse completely. Since the temperature of the first wax is maintained at its melting point until the first fusible part 1a fuses completely, fusion of the second fusible part 1b does not start. When the melting point Tₘ₂ of the second wax is sufficiently higher than the melting point Tₘ₁ of the first wax, only the first fusible part 1a fuses in the molding step (ii). Therefore, a degree of expansion of the core 3 in the molding step (ii) can be controlled by regulating a volume ratio of the first fusible part 1a in the fusible part 1. This means, in other words, the pressure applied to the prepreg preform 4 by the expansion of the core 3 can be controlled.

In order to pressurize the prepreg preform 4 by utilizing the large expansion of the core 3 concomitant to the fusion of the fusible part 1, it is necessary that the melting point Tₘ₁ of the first wax constituting the first fusible part 1a is lower than the molding temperature T_{M}, that is, the temperature of the mold 10 at the time of molding.

However, when the prepreg preform 4 is thick, that alone may be insufficient.

When the prepreg preform 4 is too thick, since the transfer of heat from the mold 10 to the core 3 is delayed, irrespective of the fact that the melting point Tₘ₁ of the first wax is lower than the molding temperature T_{M}, the prepreg preform 4 may begin to cure at a part in contact with the mold 10 before the first fusible part 1a fuses.

Until the first fusible part 1a fuses, the core 3 only weakly presses the prepreg preform 4 against the inner surface of the mold 10, thus an FRP cured in this stage has a bad appearance and may include voids.

Accordingly, when the prepreg preform 4 is thick, it is desirable to lower the melting point Tₘ₁ of the first wax to make the first fusible part 1a fuse early.

Specifically, when the thickness of the prepreg preform 4 is at least partially 1 mm or more, it is preferable that the melting point Tₘ₁ of the first wax is lower than 80°C. For example, when the melting point Tₘ₁ of the first wax is lower than 70°C, the prepreg preform 4 having a thickness of about 4 mm can be prevented from starting to cure before the first fusible part 1a fuses.

Among the prepregs, unidirectional prepregs, cloth prepregs, tow prepregs, and the like have thicknesses of only about 0.2 mm, while it is common that even a single SMC has a thickness of about 2 mm. Therefore, the effect brought by lowering the melting point Tₘ₁ of the first wax is particularly prominent when the prepreg preform 4 comprises an SMC.

When the melting point Tₘ₂ of the second wax is equal to or higher than the molding temperature T_{M}, fusion of the second wax during molding can be reliably prevented; however, on the other hand, the time required to fuse its entire amount in the wax removal step is lengthened. Depending on the molding temperature and the molding time, the melting point Tₘ₂ of the second wax is not necessarily required to be equal to or higher than the molding temperature T_{M}. When the melting point Tₘ₂ of the second wax is lower than the molding temperature T_{M}, the difference between the melting point Tₘ₂ of the second wax and the molding temperature T_{M} is not limited to, but preferably 40°C or less and may be 30°C or less, 25°C or less, or 20°C or less.

In an example, in order for the first fusible part 1a to fuse sufficiently early, in addition to lowering the melting point Tₘ₁ of the first wax, or in place of lowering the melting point Tₘ₁ of the first wax, the core 3 may be preheated before the molding step (ii).

This preheating needs to be performed such that the temperature of the core 3 does not reach the melting point Tₘ₁ of the first wax. This is because when the first fusible part 1a is fused at the stage of preheating, it becomes impossible to pressurize the prepreg preform 4 utilizing large expansion of the core 3 concomitant to the fusion of the first fusible part 1a in the molding step (ii).

The timing of preheating the core 3 is not limited, and the timing may be either before or after, or may be both before and after, disposing the prepreg preform 4 around the core 3. When the core 3 is preheated after disposing the prepreg preform 4 around the core, the prepreg preform 4 may be heated at the same time.

While a hot air circulation furnace can be preferably used for the preheating of the core 3, by using dielectric heating or microwave heating as additional means or alternative means, the preheating of the core 3 can be performed in a shorter period of time.

In order to utilize dielectric heating, particles of a material having a property of generating heat in a high-frequency electromagnetic field may be added to the fusible part 1 of the core 3 in advance.

In order to utilize microwave heating, particles of a material having a property of absorbing microwaves and thus generating heat may be added to the fusible part 1 of the core 3 in advance.

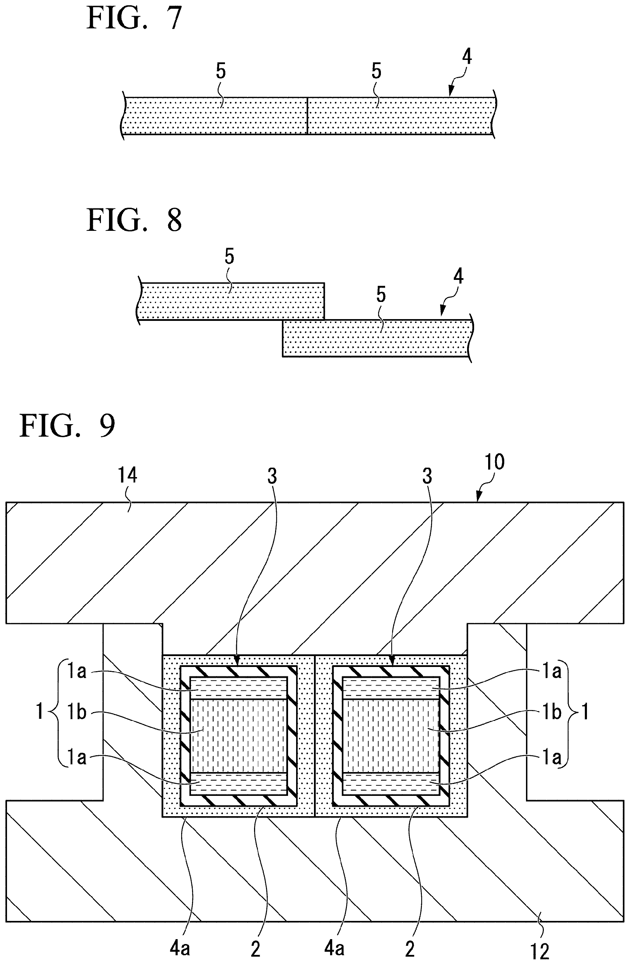

Since the prepreg preform 4 is prepared from a prepreg sheet, the prepreg preform 4 has at least any one of a butt joint between prepreg sheets 5 as shown in Fig. 7 and an overlap joint between prepreg sheets 5 as shown in Fig. 8.

The outer skin 2 of the core 3 has a role of sealing the gap between the prepreg sheets 5 at such a joint and preventing the fused wax from entering between the prepreg preform 4 and the mold 10. Therefore, the material of the outer skin 2 should be flexible and deformable at the molding temperature.

In the case of a large-sized FRP product or an FRP product that requires high strength, the FRP product may be molded from two or more partial prepreg preforms.

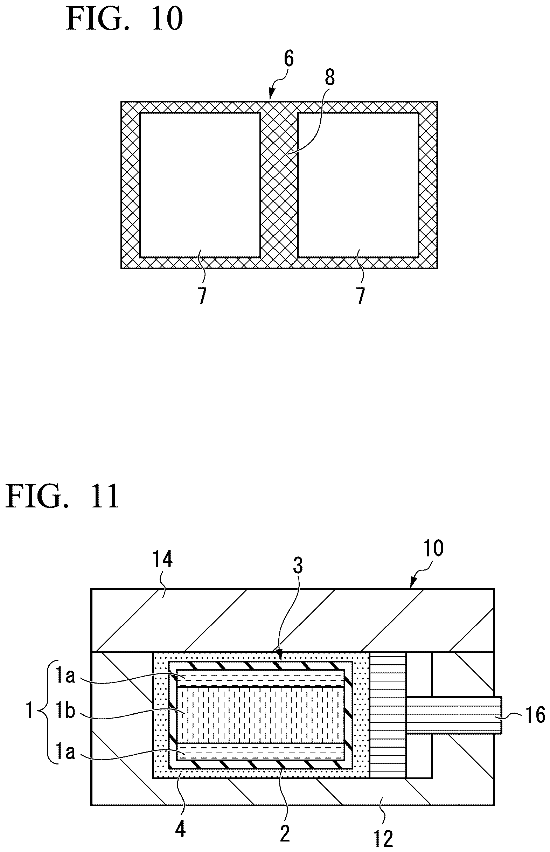

For example, as shown in Fig. 9, when two partial prepreg preforms 4a are disposed in a cavity of a mold 10 each together with a core 3 enclosed by the prepreg preform and cured, an FRP product 6 obtained thereby has a structure reinforced by a partition wall 8 located between two cavities 7, as shown in Fig. 10.

When the first fusible part 1a fuses, the two cores 3 expand greatly, and therefore, the partition wall 8 is cured in a sufficiently pressurized state and becomes void-free.

In a modified embodiment, as shown in Fig. 11, it is also acceptable to mold an FRP product from the prepreg preform 4 by using a mold 10 having a cavity formed by a lower mold 12, an upper mold 14, and a slide core 16. The movement of the slide core 16 is controlled by a pressure control mechanism (not shown) using hydraulic pressure or the like, and even when the core 3 expands, the slide core 16 does not move until the pressure in the cavity reaches a predetermined value. When the pressure in the cavity is about to exceed a predetermined value, the slide core 16 moves in the horizontal direction to relieve the pressure. It is convenient to control the molding pressure to be constant by using such a mold in order to stabilize the quality of the FRP product.

### (3) Wax removal step

In the wax removal step (iii), the FRP product obtained by curing the prepreg preform 4 in the molding step (ii) is taken out from the mold 10, and the wax constituting the fusible part 1 is removed from the core 3 filling the cavity inside the FRP product. The outer skin 2 is not required to remove, when it is firmly fixed to the inner surface of the FRP product, and as long as it does not affect a function and an appearance of the FRP product.

The wax constituting the fusible part 1 is fused by, for example, heating in an oven and is discharged through a drain hole that is formed in the FRP product using a drill or a hole saw. During heating, the temperature of the FRP product should not reach a thermal deformation temperature (deflection temperature under load).

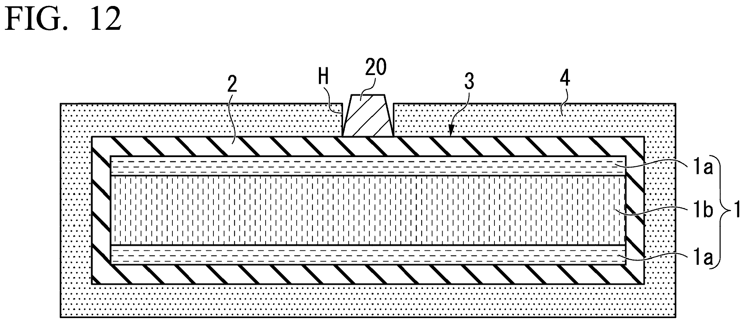

In a preferred embodiment, as shown in Fig. 12, a through-hole H may be provided in the prepreg preform 4, and an FRP product may be molded with an elastomer plug 20 inserted into the through-hole H. The gap between the through-hole H and the elastomer plug 20 is closed by flow deformation of the prepreg during molding.

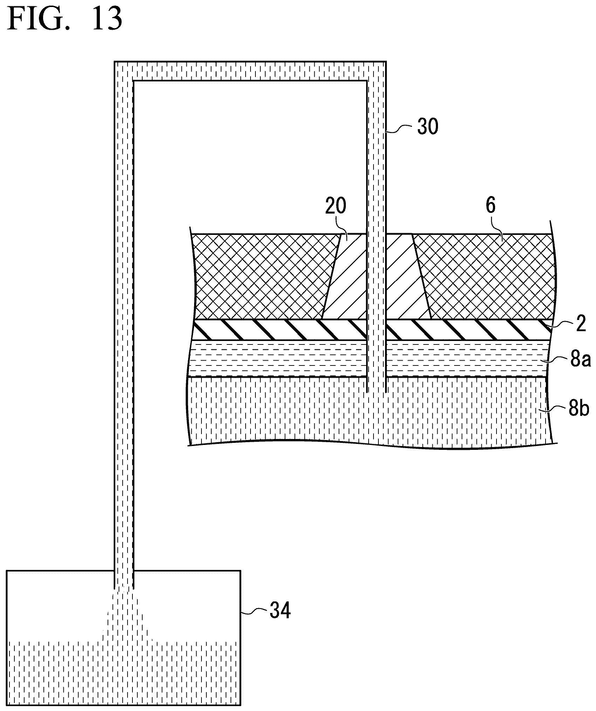

Immediately after the molding is completed and then the upper mold is lifted, one end of a metal tube 30 is made to pierce through the elastomer plug 20, and as a result, a part or all of fused wax 8a and 8b in the cavity of the FRP product 6 is discharged through the metal tube 30 into a collection container 34 connected to the other end of the metal tube 30, as shown in Fig. 13,.

According to this method, since the fused wax does not spout out when the FRP product is drilled, not only the wax can be safely removed, but also the FRP product is prevented from deformation caused by the pressure inside the cavity after taking it out from the mold.

By modifying this method, the mold may be provided with an insertion hole for passing the metal tube, and before the upper mold is lifted, the metal tube may be pierced into the FRP product in the mold through this insertion hole to discharge a part or all of the wax. In this modified embodiment, the timing of discharging the wax may be after the mold opening or may be before the mold opening.

In the example shown in Fig. 12, the reason why the elastomer plug 20 is tapered along the direction of insertion into the through-hole H is to prevent the elastomer plug 20 from coming off due to the pressure inside the cavity after the molding and before the discharging of the wax, and accordingly, the elastomer plug 20 is inserted into the through-hole H such that the side having a larger diameter of the cross-section orthogonal to the direction of insertion faces toward the core 3.

In an example, in addition to or in place of at least partially tapering the elastomer plug, protrusions or dents may be provided on the side surface of the elastomer plug.

A material of the elastomer plug is not limited to, but can be an acrylic rubber, a fluororubber, a silicone rubber, a nitrile rubber, and a butyl rubber.

The tip of the metal tube may be sharpened so that it can easily pierce the elastomer plug. When discharging the wax, it is preferable to heat at least a part of the metal tube in order to prevent solidification of the wax in the metal tube.

It is preferable that the melting point Tₘ₂ of the second wax is lower by 20°C or more than the thermal deformation temperature of the FRP product, so that the second wax can be rapidly removed from the FRP product.

In another embodiment, when an FRP product that is not hollow and does not have undercut is manufactured, it is not always necessary to fuse the fusible part in order to remove the core.

Since the first wax and the second wax are incompatible with each other, they can be easily separated and reused.

In an example, the difference in the melting point can be utilized to fuse only the first wax for separating it from the second wax.

When the specific gravity of the fused first wax and the specific gravity of the fused second wax are different, the first wax and the second wax can be separated utilizing the difference in the specific gravity.

The FRP product manufacturing method according to the embodiment has been described above using the case of manufacturing a hollow cuboid FRP article as an example, however, an external shape of the FRP product that can be manufactured by this manufacturing method is not limited to a cuboid. This manufacturing method can be applied to the manufacture of various FRP products having a structure including a bent or curved wall surface.

The FRP product manufacturing method according to the embodiment can be used not only for manufacturing a structure comprising only an FRP, but also for manufacturing a structure in which an FRP is integrally molded with a metal component, and manufacturing a structure in which an FRP comprising a thermosetting resin and an FRP comprising a thermoplastic resin are integrally molded.

### 2. Core

Another embodiment of the present invention relates to a core used for manufacturing an FRP product.

More specifically, the core of the embodiment is a core that can be disposed in a mold together with a prepreg when an FRP product having a structure including a bent or curved wall surface is manufactured by curing the prepreg by heating and pressurizing in the mold.

This core comprises a fusible part comprising a wax and an outer skin covering the fusible part.

In an example, the fusible part may have a part comprising a wax having a melting point of lower than 80°C, and this part is preferably in contact with the outer skin.

In an example, the fusible part may consist of a part comprising a wax having a melting point of lower than 80°C.

In another example, the fusible part may also have, in addition to the part comprising a wax having a melting point of lower than 80°C, another part comprising another wax that has a melting point higher than that of the wax and is incompatible with the wax.

The wax having a melting point of lower than 80°C and the other wax may be such that one of them is a wax comprising an organic compound having a polar group while the other one is a wax including a hydrocarbon as a main component.

In an example, in the core of the embodiment, particles of a material having a property of generating heat in a high-frequency electromagnetic field may be added to the fusible part.

In another example, in the core of the embodiment, particles of a material having a property of absorbing microwaves and thus generating heat may be added to the fusible part.

The core according to the embodiment can be preferably used in the manufacturing method for an FRP product described in the above-described section 1. The cores exemplified in the description of the FRP product manufacturing method in the above-described section 1. are all examples of the cores according to the embodiment.

### 3. Experimental results

### 3.1. Experiment 1

A hollow cuboid comprising an FRP and having a size of 100 mm × 50 mm × 22 mm was experimentally produced by the following procedure.

Two sheets of an SMC (STR120N131 manufactured by Mitsubishi Chemical Corporation) obtained by impregnating a chopped carbon fiber mat with an epoxy acrylate resin and having a fiber content of 53% by mass and a thickness of about 2 mm, were stacked and the resultant stack was cut into a predetermined shape and folded to prepare a prepreg preform having a near net shape.

When the prepreg preform was prepared, a core produced in a separate step was disposed inside the prepreg preform.

The core had a fusible part which comprised a synthetic wax (ITOWAX E-210 manufactured by Itoh Oil Chemicals Co., Ltd.) comprising methyl 12-hydroxystearate and having a melting point of 50°C and was covered with an outer skin formed by using a shrink tube made of a polyolefin and having a thickness of 15 µm. The core was produced to be a cuboid having a size that just fitted into the prepreg preform.

The prepreg preform was placed, together with the core enclosed by the prepreg preform, in a mold that had been heated in advance to the same temperature as a molding temperature, and the prepreg preform was heated and pressurized to be cured. The molding temperature was set to 140°C, and a molding time was set to 15 minutes. The molding time is a time from mold clamping to mold opening.

A hole having a diameter of 10 mm was drilled in the molded article taken out from the mold, and all the wax inside the molded article was fused by heating to 130°C and then discharged through this hole.

The appearance of the obtained hollow cuboid was favorable, and neither corner chippings nor wrinkles on a wall surface were observed.

### 3.2. Experiment 2

A hollow cuboid comprising an FRP was experimentally produced in the same manner as in Experiment 1, except that the fusible part of the core was formed with a synthetic wax (ITOWAX E-70G manufactured by Itoh Oil Chemicals Co., Ltd.) comprising a higher fatty acid ester and having a melting point of 68°C, instead of the synthetic wax comprising methyl 12-hydroxystearate and having a melting point of 50°C.

The appearance of the obtained hollow cuboid was favorable, and neither corner chippings nor wrinkles on a wall surface were observed.

### 3.3. Experiment 3

A hollow cuboid comprising an FRP was experimentally produced in the same manner as in Experiment 1, except that the fusible part of the core was not formed with one kind of wax but was formed with the synthetic wax (ITOWAX E-70G manufactured by Itoh Oil Chemicals Co., Ltd.) having a melting point of 68°C used for the core in Experiment 2 and a polyethylene wax (File-A-Wax Green manufactured by Freeman Manufacturing & Supply Company) having a melting point of 117°C and being incompatible with the above-described synthetic wax.

The core using the two kinds of waxes was configured by disposing pieces of the synthetic wax having a melting point of 68°C around pieces of the polyethylene wax having a melting point of 117°C. That is, wax pieces having a lower melting point were disposed at a part in contact with the outer skin. A volume ratio of the amounts of the two kinds of waxes used was 1: 1.

The appearance of the obtained hollow cuboid was favorable, and neither corner chippings nor wrinkles on a wall surface were observed.

### 3.4. Experiment 4

A hollow cuboid comprising an FRP was experimentally produced in the same manner as in Experiment 1, except that the fusible part of the core was formed with the polyethylene wax (File-A-Wax Green manufactured by Freeman Manufacturing & Supply Company) having a melting point of 117°C, instead of the synthetic wax comprising methyl 12-hydroxystearate and having a melting point of 50°C.

The obtained hollow cuboid had inferior appearance as compared with the ones obtained in the above-described Experiments 1 to 3, and had some corner chippings as well as wrinkles observed on a part of the wall surface.

### 3.5. Experiment 5

A hollow cuboid comprising an FRP and having a size of 72 mm × 36 mm × 20 mm was experimentally produced by the following procedure.

One sheet of an SMC (STR120N131 manufactured by Mitsubishi Chemical Corporation) having a thickness of 2 mm was cut into a predetermined shape, while forming, in a part thereof, a cylindrical through-hole with an inner diameter of 6 mm, and folded to prepare a prepreg preform having a near net shape.

When the prepreg preform was prepared, a core produced in a separate step was disposed inside the prepreg preform.

The core had a fusible part which comprises the synthetic wax (ITOWAX E-70G manufactured by Itoh Oil Chemicals Co., Ltd.) comprising a higher fatty acid ester and having a melting point of 68°C covered with an outer skin formed by using a nylon 6 film having a thickness of 7 µm. The core was produced to be a cuboid having a size that just fitted into the prepreg preform.

A silicone rubber plug was inserted into the through-hole provided in the SMC. This silicone rubber plug was a frustoconical tapered plug having a diameter of 6 mm at the upper surface, a diameter of 10 mm at the lower surface, and a height of 4 mm and was inserted into the through-hole such that the lower surface faced the core.

The prepreg preform was placed, together with the core enclosed by the prepreg preform, in a mold that had been heated to the same temperature as the molding temperature in advance such that the surface provided with the through-hole faced upward, and the prepreg preform was heated and pressurized to be cured. The molding temperature was set to 140°C, and the molding time was set to 10 minutes. After the molding was completed, as soon as an upper mold was lifted, one end of a stainless steel tube having an outer diameter of 2 mm and an inner diameter of 1 mm was made to pierce through the silicone rubber plug, resulting in that the fused wax flowed from the inside of the molded article through the stainless steel tube into a container connected to the other end of the stainless steel tube.

The present invention has been described above in line with specific embodiments; however, each of the embodiments has been suggested as examples and is not intended to limit the scope of the present invention. Each of the embodiments described in the present specification can be variously modified to the extent that the gist of the invention is maintained, and can be combined with the features described by other embodiments, to the extent practicable.

### [Industrial Applicability]

The invention disclosed in the present specification can be preferably used in the manufacture of an FRP product having a structure including a bent or curved wall surface.

The invention disclosed herein can be preferably used, without any limitations, when components (including structural components) for automobiles, ships, railway vehicles, aircraft and other transportation equipment, as well as various sports goods including bicycle frames, tennis rackets, and golf shafts are manufactured with fiber reinforced plastics.

### [Reference Signs List]

1: Fusible part
1a: First fusible part
1b: Second fusible part
2: Outer skin
3: Core
4: Prepreg preform
5: Prepreg sheet
6: FRP product
7: Cavity
8a: First wax melt
8b: Second wax melt
10: Mold
12: Lower mold
14: Upper mold
16: Slide core
20: Elastomer plug
30: Metal tube
34: Collection container

## Claims

1. A manufacturing method for a fiber reinforced plastic product, including:
a molding step including disposing a prepreg preform in a mold together with a core comprising a fusible part comprising a wax and an outer skin covering the fusible part, and heating and pressurizing the prepreg preform in the mold to obtain a cured product, and in which the prepreg preform is at least partially pressurized by expansion of the core; and
a wax removal step including removing the wax from the cured product,
wherein a molding temperature in the molding step is 140°C or higher,
the prepreg preform at least partially has a thickness of 1 mm or more, and
the fusible part has a first fusible part comprising a first wax having a melting point of lower than 80°C.

2. The manufacturing method according to Claim 1, wherein the first fusible part is in contact with the outer skin.

3. The manufacturing method according to Claim 1 or 2, wherein the core is preheated before the molding step.

4. The manufacturing method according to Claim 3, wherein the fusible part comprises particles of a material having a property of generating heat in a high-frequency electromagnetic field, and the preheating is performed by induction heating.

5. The manufacturing method according to Claim 3, wherein the fusible part comprises particles of a material having a property of absorbing microwaves and thus generating heat, and the preheating is performed by microwave heating.

6. The manufacturing method according to any one of Claims 1 to 5, wherein the fusible part consists of the first fusible part.

7. The manufacturing method according to any one of Claims 1 to 5, wherein the fusible part comprises the first fusible part and a second fusible part comprising a second wax having a melting point higher than that of the first wax and being incompatible with the first wax.

8. The manufacturing method according to Claim 7, wherein one of the first wax and the second wax is a wax comprising an organic compound having a polar group, and the other is a wax comprising a hydrocarbon as a main component.

9. The manufacturing method according to any one of Claims 1 to 8, wherein the prepreg preform comprises an SMC.

10. The manufacturing method according to any one of Claims 1 to 9, wherein in the molding step, a plurality of the prepreg preforms are disposed in the mold such that each of the prepreg preforms encloses one said core, and the prepreg preforms are heated and pressurized in the mold to obtain a single cured product.

11. The manufacturing method according to any one of Claims 1 to 10, wherein the mold comprises a cavity formed by a lower mold, an upper mold, and a slide core.

12. A core to be disposed in a mold together with a prepreg when a fiber reinforced plastic product is manufactured by curing the prepreg by heating and pressurizing thereof in the mold, the core comprising:
a fusible part comprising a wax; and
an outer skin covering the fusible part,
wherein the fusible part has a first fusible part comprising a first wax having a melting point of lower than 80°C.

13. The core according to Claim 12, wherein the first fusible part is in contact with the outer skin.

14. The core according to Claim 12 or 13, wherein the fusible part comprises particles of a material having a property of generating heat in a high-frequency electromagnetic field.

15. The core according to Claim 12 or 13, wherein the fusible part comprises particles of a material having a property of absorbing microwaves and thus generating heat.

16. The core according to any one of Claims 12 to 15, wherein the fusible part consists of the first fusible part.

17. The core according to any one of Claims 12 to 15, wherein the fusible part comprises the first fusible part and a second fusible part comprising a second wax having a melting point higher than that of the first wax and being incompatible with the first wax.

18. The core according to Claim 17, wherein one of the first wax and the second wax is a wax comprising an organic compound having a polar group, and the other is a wax comprising a hydrocarbon as a main component.

19. A core to be disposed in a mold together with a prepreg when a fiber reinforced plastic product is manufactured by curing the prepreg by heating and pressurizing thereof in the mold, the core comprising:
a fusible part comprising a wax; and
an outer skin covering the fusible part,
wherein the fusible part comprises particles of a material having a property of generating heat in a high-frequency electromagnetic field.

20. The core according to Claim 19, wherein the fusible part comprises a first fusible part comprising a first wax and a second fusible part comprising a second wax having a melting point higher than that of the first wax and being incompatible with the first wax.

21. The core according to Claim 20, wherein the first fusible part is in contact with the outer skin.

22. The core according to Claim 20 or 21, wherein one of the first wax and the second wax is a wax comprising an organic compound having a polar group, and the other is a wax comprising a hydrocarbon as a main component.

23. A manufacturing method for a fiber reinforced plastic product, including:
a molding step including disposing a prepreg in a mold together with the core according to any one of Claims 19 to 22 and heating and pressurizing the prepreg in the mold to obtain a cured product; and
a wax removal step including removing the wax constituting the fusible part of the core from the cured product,
wherein the core is preheated by induction heating before the molding step, and
in the molding step, the fusible part of the core at least partially fuses, and the prepreg is at least partially pressurized by expansion of the core.

24. A core to be disposed in a mold together with a prepreg when a fiber reinforced plastic product is manufactured by curing the prepreg by heating and pressurizing thereof in the mold, the core comprising:
a fusible part comprising a wax; and
an outer skin covering the fusible part,
wherein the fusible part comprises particles of a material having a property of absorbing microwaves and thus generating heat.

25. The core according to Claim 24, wherein the fusible part comprises a first fusible part comprising a first wax and a second fusible part comprising a second wax having a melting point higher than that of the first wax and being incompatible with the first wax.

26. The core according to Claim 25, wherein the first fusible part is in contact with the outer skin.

27. The core according to Claim 25 or 26, wherein one of the first wax and the second wax is a wax comprising an organic compound having a polar group, and the other is a wax comprising a hydrocarbon as a main component.

28. A manufacturing method for a fiber reinforced plastic product, including:
a molding step including disposing a prepreg in a mold together with the core according to any one of Claims 24 to 27 and heating and pressurizing the prepreg in the mold to obtain a cured product; and
a wax removal step including removing the wax constituting the fusible part of the core from the cured product,
wherein the core is preheated by microwave heating before the molding step, and
in the molding step, the fusible part of the core at least partially fuses,and the prepreg is at least partially pressurized by expansion of the core.

29. A manufacturing method for a fiber reinforced plastic product, including:
disposing a prepreg in a mold together with the core according to any one of Claims 12 to 22 and 24 to 27 and curing the prepreg by heating and pressurizing thereof in the mold.

30. Use of the core according to any one of Claims 12 to 22 and 24 to 27, in a manufacturing method for a fiber reinforced plastic product including disposing a prepreg in a mold together with a core and curing the prepreg by heating and pressurizing thereof in the mold.

31. A manufacturing method for a fiber reinforced plastic product, including:
a molding step including heating and pressurizing a prepreg preform in a mold to obtain a cured product having a hollow part, the prepreg preform having a core-containing part in which a core comprising a fusible part comprising a wax and an outer skin covering the fusible part, is wrapped with a prepreg sheet; and
a wax removal step including removing the wax from an inside of the hollow part,
wherein the prepreg preform has a through-hole formed in the core-containing part, and an elastomer plug is inserted into the through-hole.

32. The manufacturing method according to Claim 31, wherein the elastomer plug is at least partially tapered along a direction of insertion into the through-hole.

33. The manufacturing method according to Claim 32, wherein the elastomer plug is inserted into the through-hole such that a side having a larger diameter of a cross-section orthogonal to the direction of insertion into the through-hole faces toward the core.

34. The manufacturing method according to any one of Claims 31 to 33, wherein the elastomer plug has a protrusion or a dent on a side surface.

35. The manufacturing method according to any one of Claims 31 to 34, wherein in the wax removal step, one end of a metal tube is made to pierce through the elastomer plug, and all or a part of the wax is discharged from the hollow part through the metal tube.

36. The manufacturing method according to Claim 35, wherein in the wax removal step, the metal tube is at least partially heated.

37. The manufacturing method according to Claim 35 or 36, wherein the other end of the metal tube is connected to a collection container.

38. The manufacturing method according to any one of Claims 31 to 37, wherein the core is preheated before the molding step.

39. The manufacturing method according to Claim 38, wherein the fusible part comprises particles of a material having a property of generating heat in a high-frequency electromagnetic field, and the preheating is performed by induction heating.

40. The manufacturing method according to Claim 38, wherein the fusible part comprises particles of a material having a property of absorbing microwaves and thus generating heat, and the preheating is performed by microwave heating.

41. The manufacturing method according to any one of Claims 31 to 40, wherein the prepreg preform at least partially has a thickness of 1 mm or more in the core-containing part, the fusible part has a first fusible part comprising a first wax having a melting point of lower than 80°C, and the molding temperature in the molding step is 140°C or higher.

42. The manufacturing method according to Claim 41, wherein the first fusible part is in contact with the outer skin.

43. The manufacturing method according to Claim 41 or 42, wherein the fusible part consists of the first fusible part.

44. The manufacturing method according to Claim 41 or 42, wherein the fusible part comprises the first fusible part and a second fusible part comprising a second wax having a melting point higher than that of the first wax and being incompatible with the first wax.

45. The manufacturing method according to Claim 44, wherein one of the first wax and the second wax is a wax comprising an organic compound having a polar group, and the other is a wax comprising a hydrocarbon as a main component.

46. The manufacturing method according to any one of Claims 41 to 45, wherein the prepreg preform comprises an SMC.

47. A manufacturing method for a fiber reinforced plastic product, including:
a molding step including disposing a prepreg preform in a mold together with a core comprising a fusible part comprising a wax and an outer skin covering the fusible part, and heating and pressurizing the prepreg preform in the mold to obtain a cured product, and in which the prepreg preform is at least partially pressurized by expansion of the core; and
a wax removal step including removing the wax from the cured product,
wherein the core is preheated before the molding step.

48. The manufacturing method according to Claim 47, wherein the fusible part has a first fusible part comprising a first wax having a melting point of lower than 80°C.

49. The manufacturing method according to Claim 48, wherein the first fusible part is in contact with the outer skin.

50. The manufacturing method according to Claim 48 or 49, wherein the fusible part consists of the first fusible part.

51. The manufacturing method according to Claim 48 or 49, wherein the fusible part comprises the first fusible part and a second fusible part comprising a second wax having a melting point higher than that of the first wax and being incompatible with the first wax.

52. The manufacturing method according to Claim 51, wherein one of the first wax and the second wax is a wax comprising an organic compound having a polar group, and the other is a wax comprising a hydrocarbon as a main component.

53. The manufacturing method according to any one of Claims 47 to 52, wherein the prepreg preform at least partially has a thickness of 1 mm or more.

54. The manufacturing method according to Claim 53, wherein the prepreg preform comprises an SMC.

55. The manufacturing method according to any one of Claims 47 to 54, wherein the molding temperature in the molding step is 140°C or higher.
